# EUROPEAN PATENT APPLICATION

(11) **EP 1 940 134 A2**
(43) Date of publication of application: **02.07.2008**
(21) Application number: 07024969.3
(22) Date of filing: 21.12.2007
(51) Int. Cl.: H04M 1/253, H04M 1/725

(54) **Internet telephone set with additional function to reproduce sound differing from sound based on general internet telephone, as well as internet telephone system including such internet telephone set**

(30) Priority: 27.12.2006 JP 2006352307
(71) Applicant: Funai Electric Co., Ltd., Daito-shi, Osaka 574-0013 (JP)
(72) Inventor: Zuo, Guokun, Daito-shi Osaka 574-0013 (JP); Masaki, Yasuo, Daito-shi Osaka 574-0013 (JP); Okazaki, Akinori, Daito-shi Osaka 574-0013 (JP); Murakami, Sadanori, Daito-shi Osaka 574-0013 (JP); Takeshita, Masahiro, Daito-shi Osaka 574-0013 (JP); Kokado, Masao, Daito-shi Osaka 574-0013 (JP); Tsubota, Hirono, Daito-shi Osaka 574-0013 (JP)
(74) Representative: Grünecker, Kinkeldey, Stockmair & Schwanhäusser Anwaltssozietät

(57) **Abstract**

An internet telephone set (102) includes a receiver (21) receiving a first radio signal converted from an audio signal corresponding to video to be displayed at another device and a second radio signal converted from an internet telephone signal, a control unit (22) selecting the first or second radio signal, and an audio processor (23) converting the first or second radio signal to an audio signal based on the selection by the control unit (22).

## Description

### BACKGROUND OF THE INVENTION

### Field of the Invention

The present invention relates to internet telephone sets and internet telephone systems, particularly an internet telephone set with an additional function to reproduce sound differing from sound based on a general internet telephone, and an internet telephone system including such an internet telephone set.

### Description of the Background Art

Widespread use of mobile phones corresponding to an internet telephone (IP (Internet Protocol) telephony) is expected. For example, Japanese Patent Laying-Open Nos. 05-091169 (Patent Document 1), 2002-009903 (Patent Document 2), 2002-300238 (Patent Document 3), and 2001-308975 (Patent Document 4) disclose a device with a radio function to process audio signals.

However, Patent Documents 1-4 are silent about a configuration that can receive and reproduce a radio signal including audio information corresponding to video to be displayed at another device such as a television device, based on favorable reception quality.

### SUMMARY OF THE INVENTION

An object of the present invention is to provide an internet telephone set that can receive and reproduce a radio signal including audio information corresponding to video to be displayed at another device, based on favorable reception quality, and an internet telephone system including such an internet telephone set.

An internet telephone system according to an aspect of the present invention includes a video display device and an internet telephone set. The video display device includes a display unit displaying video, a first audio processor obtaining an audio signal corresponding to the video, and a transmitter converting the audio signal to a first radio signal for transmission. The internet telephone set includes a receiver receiving a second radio signal that is converted from an internet telephone signal and the first radio signal, a control unit selecting the first radio signal or the second radio signal, and a second audio processor converting the first radio signal or the second radio signal to an audio signal based on selection by the control unit, and a connector to which a headphone, an earphone, or a headset is connected. The second audio processor provides the converted audio signal to the headphone, the earphone, or the headset via the connector. The second audio processor converts the first radio signal to an audio signal by a streaming reproduction scheme. The video display device further includes a receiver receiving a television broadcast signal, and a video processor extracting a video signal from the received television broadcast signal. The display unit displays video based on the video signal. The first audio processor extracts an audio signal corresponding to video from the received television broadcast signal.

An internet telephone system according to another aspect of the present invention includes a video display device and an internet telephone set. The video display device includes a display unit displaying video, a first audio processor obtaining an audio signal corresponding to the video, and a transmitter converting the audio signal to a first radio signal for transmission. The internet telephone set includes a receiver receiving a second radio signal that is converted from an internet telephone signal and the first radio signal, a control unit selecting the first radio signal or the second radio signal, and a second audio processor converting the first radio signal or the second radio signal to an audio signal based on the selection by the control unit.

Preferably, the internet telephone set further includes a connector to which a headphone, an earphone, or a headset is connected. The second audio processor provides the converted audio signal to the headphone, the earphone, or the headset via the connector.

Preferably, the second audio processor converts the first radio signal to an audio signal by a streaming reproduction scheme.

Preferably, the video display device further includes a receiver receiving a television broadcast signal, and a video processor extracting a video signal from the received television broadcast signal. The display unit displays video based on the video signal. The first audio processor extracts an audio signal corresponding to the video from the received television broadcast signal.

An internet telephone set according to an aspect of the present invention includes a receiver receiving a first radio signal converted from an audio signal corresponding to video to be displayed at another device and a second radio signal converted from an internet telephone signal, a control unit selecting the first radio signal or the second radio signal, an audio processor converting the first radio signal or the second radio signal to an audio signal based on the selection by the control unit, and a connector to which a headphone, an earphone, or a headset is connected. The audio processor provides the converted audio signal to the headphone, the earphone, or the headset via the connector. The audio processor converts the first radio signal to an audio signal by a streaming reproduction scheme.

An internet telephone set according to a further aspect of the present invention includes a receiver receiving a first radio signal converted from an audio signal corresponding to video to be displayed at another device and a second radio signal converted from an internet telephone signal, a control unit selecting the first radio signal or the second radio signal, and an audio processor converting the first radio signal or the second radio signal to an audio signal based on the selection by the control unit.

Preferably, the internet telephone set further includes a connector to which a headphone, an earphone, or a headset is connected. The audio processor provides the converted audio signal to the headphone, the earphone, or the headset via the connector.

Preferably, the audio processor converts the first radio signal to an audio signal by a streaming reproduction scheme.

According to the present invention, a radio signal including audio information corresponding to video to be displayed at another device is received and reproduced, based on favorable reception quality.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 represents a configuration of an internet telephone system according to an embodiment of the present invention.
Fig. 2 is a functional block diagram of a configuration of a television device according to an embodiment of the present invention.
Fig. 3 is a functional block diagram of a configuration of an internet telephone set according to an embodiment of the present invention.

### DESCRIPTION OF THE PREFERRED EMBODIMENTS

Embodiments of the present invention will be described hereinafter with reference to the drawings. In the drawings, the same or corresponding elements have the same reference characters, and description thereof will not be repeated.

### Configuration and Basic Operation

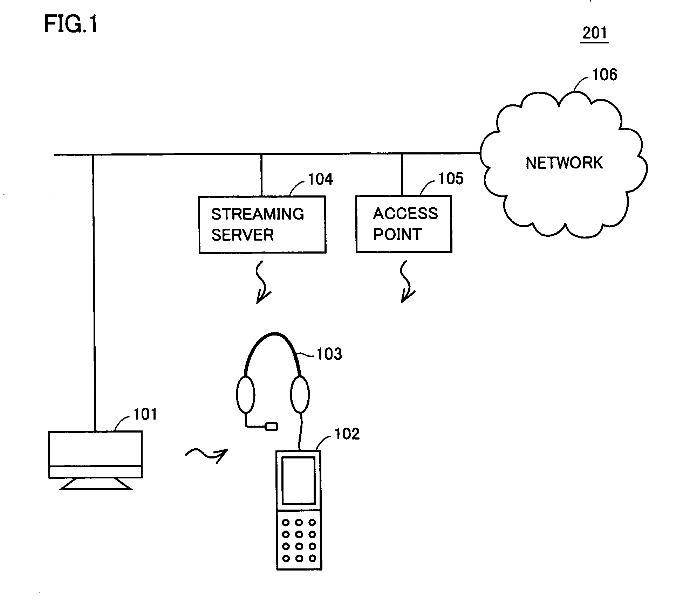

Referring to Fig. 1, an internet telephone system 201 according to an embodiment of the present invention includes a television device (video display device) 101, an internet telephone set 102, a streaming server 104, and an access point 105. A headset 103 is attached to internet telephone set 102.

Television device 101 receives a television broadcast signal, and displays video based on the received television broadcast signal. Television device 101 extracts an audio signal corresponding to the video to be displayed from the received television broadcast signal, and converts the extracted audio signal to a television radio signal (first radio signal) for transmission to internet telephone set 102. Television device 101 may be configured to incorporate a transmitter that transmits a television radio signal, or have a wireless device connected thereto via an audio output terminal to which a headphone or the like is to be connected.

Access point 105 converts the internet telephone signal received via a network 106 to an internet telephone radio signal (second radio signal) for transmission to internet telephone set 102. The internet telephone signal includes voice, ringing sound, and the like.

Streaming server 104 converts the digital content such as audio, video, and the like downloaded via network 106, i.e. received through network 106, into data corresponding to a streaming scheme, and converts the converted data to a digital content radio signal for transmission to internet telephone set 102. Streaming server 104 may be configured to convert data such as sound and video corresponding to the streaming scheme received through network 106 to a digital content radio signal for transmission to internet telephone set 102.

Internet telephone set 102 converts the television radio signal received from television device 101 and the internet telephone radio signal received from access point 105 to audio signals. The converted audio signals are provided to headset 103.

Internet telephone set 102 also converts the digital content radio signal received from streaming server 104 to an audio signal, a video signal, and the like by the streaming reproduction scheme. Internet telephone set 102 displays video based on the converted video signal, and provides the converted audio signal to headset 103.

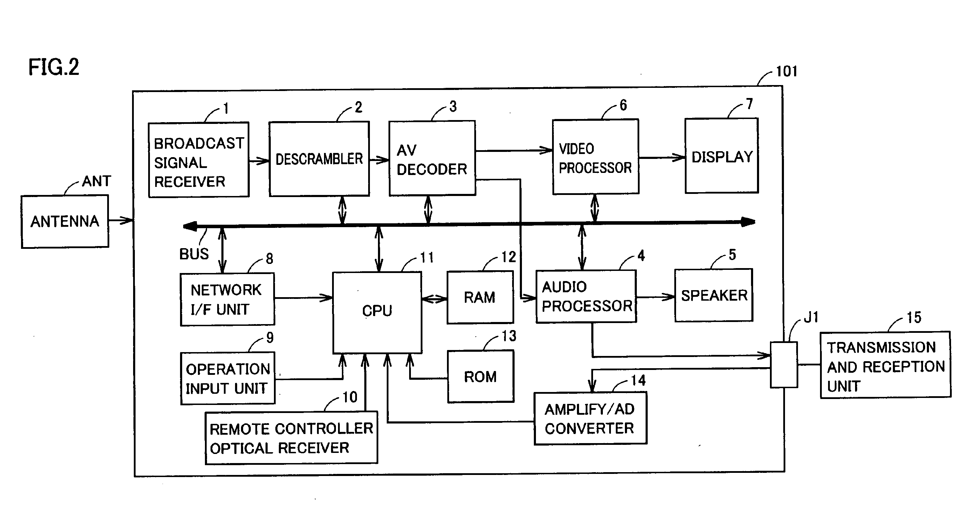

Referring to the functional block diagram of Fig. 2, television device 101 includes a broadcast signal receiver 1, a descrambler 2, an AV (Audio Visual) decoder 3, an audio processor (first audio processor) 4, a speaker 5, a video processor 6, a display (display unit) 7, a network I/F (interface) unit 8, an operation input unit 9, a remote controller optical receiver 10, a CPU (Central Processing Unit) 11, a memory (Random Access Memory) 12, a ROM (Read Only Memory) 13, an amplify/AD (Analog Digital) converter 14, and a jack (connector) J1. Television device 101 may be configured to include a transmission and reception unit 15.

Broadcast signal receiver 1 receives a television broadcast signal that is subjected to scrambling via an antenna ANT and provides the scrambled television broadcast signal to descrambler 2.

Descrambler 2 descrambles the television broadcast signal from television signal receiver 1 to restore the signal to the state prior to scrambling, and provides the restored signal to AV decoder 3.

AV decoder 3 decodes the restored signal from descrambler 2 and provides the decoded signal to audio processor 4 and video processor 6.

Video processor 6 extracts a video signal from the decoded signal output from AV decoder 3, and provides the extracted video signal to display 7. Display 7 provides video based on the video signal received from video processor 6.

Audio processor 4 extracts an audio signal from the decoded signal output from AV decoder 3, i.e. obtains an audio signal corresponding to the video to be displayed by display 7. Audio processor 4 provides the extracted audio signal to speaker 5. Speaker 5 provides sound based on the audio signal received from audio processor 4. Audio processor 4 provides the extracted audio signal to transmission and reception unit 15 via jack J1.

Transmission and reception unit 15 converts the audio signal received from audio processor 4 to a radio signal for transmission to internet telephone set 102. Furthermore, transmission and reception unit 15 receives a radio signal from internet telephone set 102 and provides the radio signal to amplify/AD converter 14. Transmission and reception unit 15 accommodates IEEE802.11a/11b/11g, i.e. WiFi (Wireless Fidelity), that is the standard of a wireless LAN.

Amplify/AD converter 14 amplifies the signal received from transmission and reception unit 15, and converts the amplified signal to digital data for output to CPU 11.

Operation input unit 9 recognizes an operation made by the user such as button depression at television device 101, and provides data representing the operation information to CPU 11.

Remote controller optical receiver 10 recognizes an operation made by the user such as button depression on the remote controller, and provides data representing the operation information to CPU 11.

Network interface unit 8 provides data received through a network to CPU 11.

CPU 11 controls respective blocks of television device 101 based on the data stored in memory 12 and ROM 13, as well as data received from amplify/AD converter 14, network interface unit 8, operation input unit 9, and remote controller optical receiver 10.

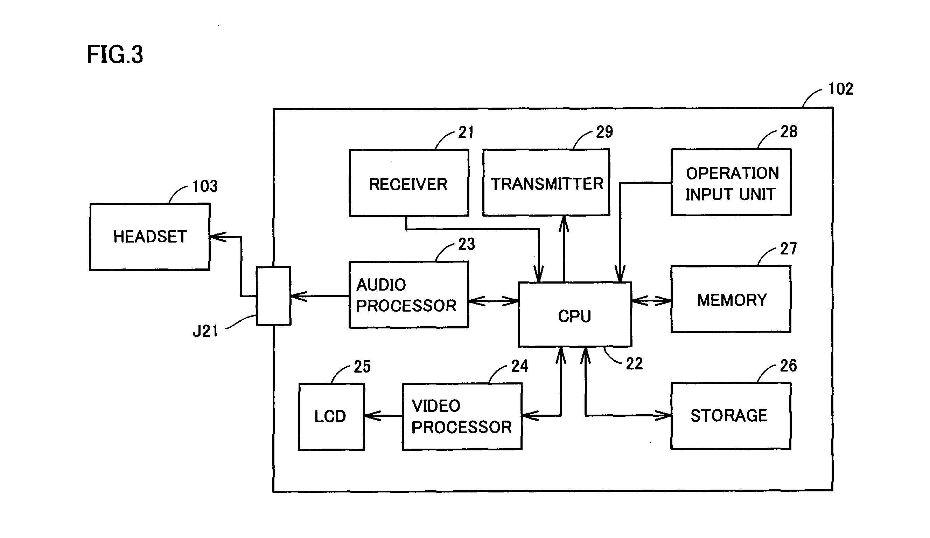

Referring to the functional block diagram of Fig. 3, internet telephone set 102 includes a receiver 21, a CPU (control unit) 22, an audio processor (second audio processor) 23, a video processor 24, an LCD (Liquid Crystal Display) 25, a storage unit 26, a memory 27, an operation input unit 28, and a jack (connector) J21. Receiver 21 and transmitter 29 correspond to IEEE802.11a/11b/11g, i.e. WiFi (Wireless Fidelity), that is the standard of a wireless LAN.

A headset 103 is connected to jack J21. An earphone or a headphone may be connected to jack J21.

Receiver 21 receives the radio signal from television device 101 and access point 105 for output to CPU 22 as a reception signal.

CPU 22 selects one of the television radio signal from television device 101, the internet telephone radio signal from access point 105, and the digital content radio signal from streaming server 104, and provides a reception signal corresponding to the selected radio signal to audio processor 23, based on, for example, an operation made by the user.

In the case where CPU 22 selects the television radio signal, audio processor 23 converts the reception signal from CPU 22 to an audio signal by, for example, a streaming reproduction scheme. Specifically, audio processor 23 temporarily stores a newly received audio signal from CPU 22 in a buffer not shown and, at the same time, converts an obtained reception signal previously received from CPU 22 and stored in the buffer to an audio signal. Since the time required for conversion to an audio signal is shorter than that for conversion to a video signal, the delay in reproducing sound at internet telephone set 102 with respect to the display of video at television device 101 can be suppressed to a level almost indiscernible to the user.

Audio processor 23 corresponds to, for example, a digital media player (DMP) function, a streaming client function, and the like.

Audio processor 23 converts the reception signal from CPU 22 to an audio signal when CPU 22 selects the internet telephone radio signal.

In the case where the digital content radio signal is selected, CPU 22 provides a reception signal corresponding to the digital content radio signal to audio processor 23 and video processor 24.

In the case where CPU 22 selects the digital content radio signal, audio processor 23 converts the reception signal from CPU 22 to an audio signal by, for example, a streaming reproduction scheme.

Video processor 24 generates a video signal based on the reception signal from CPU 22, and provides the generated video signal to LCD 25. LCD 25 displays video based on the video signal received from video processor 24.

Audio processor 23 provides the converted audio signal to headset 103 via jack J21. Headset 103 issues sound based on the audio signal from audio processor 23. Internet telephone set 102 may be configured to have a microphone and speaker built in, instead of having headset 103 connected thereto.

Storage unit 26 stores digital content such as sound and video included in the digital content radio signal received from streaming server 104, or the digital content directly written in storage unit 26. CPU 22 reads out the digital content from storage unit 26 for output to audio processor 23 and video processor 24.

Transmitter 29 converts the control data, conversation data and the like received from CPU 22 to a radio signal for transmission to television device 101 and access point 105.

Patent Documents 1-4 are silent about a configuration in which a radio signal including audio information corresponding to video to be displayed at another device such as the television device is received and reproduced, based on favorable reception quality. The internet telephone set according to an embodiment of the present invention has CPU 22 select any one of a television radio signal received from television device 101, an internet telephone radio signal received from access point 105, and a digital content radio signal received from streaming server 104, and provides a reception signal corresponding to the selected radio signal to audio processor 23 based on, for example, an operation made by the user. Audio processor 23 switches among conversion of the television radio signal to an audio signal, conversion of the internet telephone radio signal to an audio signal, and conversion of the digital content radio signal to an audio signal, based on the selection by CPU 22, and provides the converted audio signal to headset 103 via connector J21. By such a configuration, a radio signal including audio information corresponding to video to be displayed at another device such as television device 101 can be received for sound reproduction. By the configuration in which the sound of television device 101 is reproduced at internet telephone set 102, favorable reception quality can be realized taking advantage of the high audio reception function of internet telephone set 102.

By reproducing the sound of television device 101 through internet telephone set 102 in real time, a radio signal including audio information requiring real-time processing such as a television broadcast signal can be received to allow real-time reproduction. The headset connected to internet telephone set 102 can be used effectively. Furthermore, by adding the function of reproducing sound of television device 101 to internet telephone set 102, the additional value of internet telephone set 102 can be improved.

In the internet telephone set according to an embodiment of the present invention, CPU 22 selects any one of a television radio signal received from television device 101, an internet telephone radio signal received from access point 105, and a digital content radio signal received from streaming server 104, based on an operation made by the user, to provide a reception signal corresponding to the selected radio signal to audio processor 23. Audio processor 23 converts the music data or reception signal from CPU 22 to an audio signal. However, the present invention is not limited to the above-described configuration.

For example, audio processor 23 receives a reception signal corresponding to a television radio signal, an internet telephone radio signal, and a digital content radio signal from receiver 21. CPU 22 selects any one of the television radio signal received from television device 101, the internet telephone radio signal received from access point 105, and the digital content radio signal received from streaming server 104, based on, for example, an operation made by the user, and provides a control signal representing the selected result to audio processor 23. Audio processor 23 may be configured to switch among conversion of the television radio signal to an audio signal, conversion of the internet telephone radio signal to an audio signal, and conversion of the digital content radio signal to an audio signal, based on the control signal received from CPU 22.

The internet telephone system according to an embodiment of the present invention was described including television device 101. The present invention is not limited thereto. A configuration employing a video display device other than television device 101, providing a video display and converting an audio signal corresponding to the video to a radio signal for transmission, may be implemented.

Although the present invention has been described and illustrated in detail, it is clearly understood that the same is by way of illustration and example only and is not to be taken by way of limitation, the scope of the present invention being interpreted by the terms of the appended claims.

## Claims

1. An internet telephone system comprising:
a video display device (101), and
an internet telephone set (102),
wherein said video display device (101) includes
a display unit (7) displaying video,
a first audio processor (4) obtaining an audio signal corresponding to said video, and
a transmitter (15) converting said audio signal to a first radio signal for transmission,
wherein said internet telephone set (102) includes
a receiver (21) receiving a second radio signal converted from an internet telephone signal and said first radio signal,
a control unit (22) selecting said first radio signal or said second radio signal,
a second audio processor (23) converting said first radio signal or said second radio signal to an audio signal, based on selection by said control unit (22), and
a connector (J21) to which a headphone (103), an earphone (103), or a headset (103) is connected,
said second audio processor (23) providing said converted audio signal to said headphone (103), said earphone (103) or said headset (103) via said connector (J21),
said second audio processor (23) converting said first radio signal to an audio signal by a streaming reproduction scheme,
wherein said video display device (101) further includes
a receiver (21) receiving a television broadcast signal, and
a video processor (6) extracting a video signal from said received television broadcast signal,
said display unit (7) displaying video based on said video signal,
said first audio processor (4) extracting an audio signal corresponding to said video from said received television broadcast signal.

2. An internet telephone system comprising:
a video display device (101), and
an internet telephone set (102),
wherein said video display device (101) includes
a display unit (7) displaying video,
a first audio processor (4) obtaining an audio signal corresponding to said video, and
a transmitter (15) converting said audio signal to a first radio signal for transmission,
wherein said internet telephone set (102) includes
a receiver (21) receiving a second radio signal that is converted from an internet telephone signal and said first radio signal,
a control unit (22) selecting said first radio signal or said second radio signal, and
a second audio processor (23) converting said first radio signal or said second radio signal to an audio signal, based on selection by said control unit (22).

3. The internet telephone system according to claim 2, wherein said internet telephone set (102) further includes a connector (J21) to which a headphone (103), an earphone (103) or a headset (103) is connected,
said second audio processor (23) providing said converted audio signal to said headphone (103), said earphone (103) or said headset (103) via said connector (J21).

4. The internet telephone system according to claim 2, wherein said second audio processor (23) converts said first radio signal to an audio signal by a streaming reproduction scheme.

5. The internet telephone system according to claim 2, wherein said video display device (101) further includes
a receiver (21) receiving a television broadcast signal, and
a video processor (6) extracting a video signal from said received television broadcast signal,
said display unit (7) displaying video based on said video signal,
said first audio processor (4) extracting an audio signal corresponding to said video from said received television broadcast signal.

6. An internet telephone set comprising:
a receiver (21) receiving a first radio signal converted from an audio signal corresponding to video to be displayed at another device and a second radio signal converted from an internet telephone signal,
a control unit (22) selecting said first radio signal or said second radio signal,
an audio processor (23) converting said first radio signal or said second radio signal to an audio signal based on selection by said control unit (22), and
a connector (J21) to which a headphone (103), an earphone (103), or a headset (103) is connected,
said audio processor (23) providing said converted audio signal to said headphone (103), said earphone (103) or said headset (103) via said connector (J21), said audio processor (23) converting said first radio signal to an audio signal by a streaming reproduction scheme.

7. An internet telephone set comprising:
a receiver (21) receiving a first radio signal converted from an audio signal corresponding to video to be displayed at another device, and a second radio signal converted from an internet telephone signal,
a control unit (22) selecting said first radio signal or said second radio signal, and
an audio processor (23) converting said first radio signal or said second radio signal to an audio signal based on selection by said control unit (22).

8. The internet telephone set according to claim 7, wherein said internet telephone set (102) further includes a connector (J21) to which a headphone (103), an earphone (103), or a headset (103) is connected,
said audio processor (23) providing said converted audio signal to said headphone (103), said earphone (103), or said headset (103) via said connector (J21).

9. The internet telephone set according to claim 7, wherein said audio processor (23) converts said first radio signal to an audio signal by a streaming reproduction scheme.
